# EUROPÄISCHE PATENTSCHRIFT

(11) **EP 2 609 981 B1**
(45) Veröffentlichungstag und Bekanntmachung des Hinweises auf die Patenterteilung: **20.02.2019**
(21) Anmeldenummer: 12008659.0
(22) Anmeldetag: 28.12.2012
(51) Int. Cl.: B01D 53/04, A47L 15/48, B01D 53/26, D06F 58/24

(54) **VERFAHREN UND ADSORBER ZUR LUFTENTFEUCHTUNG**
METHOD AND ADSORBER FOR DEHUMIDIFYING AIR
PROCÉDÉ ET ADSORBEUR DESTINÉ À LA DÉSHUMIDIFICATION DE L'AIR

(30) Priorität: 02.01.2012 DE 102012000013
(43) Veröffentlichungstag der Anmeldung: 03.07.2013
(73) Patentinhaber: Hobart GmbH, 77656 Offenburg (DE)
(72) Erfinder: Maier-Laxhuber, Peter, 85276 Pfaffenhofen (DE); Schmidt, Ralf, 85354 Freising (DE); Becky, Andreas, 85635 Höhenkirchen-Siegertsbrunn (DE); Wörz, Reiner, 85293 Reichertshausen (DE)
(74) Vertreter: Trinks, Ole

(56) Entgegenhaltungen:
- EP-A1- 2 301 409
- EP-A1- 2 305 876
- EP-A1- 2 389 854
- DE-A1- 10 353 774
- DE-A1-102005 004 096
- FR-A- 1 401 668

## Beschreibung

Die Erfindung betrifft Verfahren und Vorrichtungen zur Luftentfeuchtung mit einem Sorber, der ein Sorptionsmittel enthaltend aus einem Luftstrom Feuchtigkeit aufnimmt und in dem das Sorptionsmittel in einem darauffolgenden Desorptionsprozess teilweise ohne Luftstrom getrocknet (regeneriert) wird. Um das Sorptionsmittel zu trocknen muss dessen Temperatur stark erhöht werden. Der dabei entweichende Wasserdampf wird in einer vorausgehenden Prozessphase zur Erwärmung oder Befeuchtung genutzt. Der Luftentfeuchter ist insbesondere für Spülmaschinen und Wäschetrockner vorgesehen.

In einer ganzen Reihe von Patentanmeldungen mit teilweise identischen Beschreibungsbestandteilen ist der Stand der Technik der heute auf dem Markt erhältlichen, energiesparendsten Spülmaschinen zusammengestellt. So beschreibt beispielsweise die WO 201001 2659 eine Geschirrspülmaschine mit einem ein Sorptionsmittel enthaltenden Sorber. Mittels eines Gebläses wird dabei Heißluft durch das Sorptionsmittel geleitet und getrocknet. Die Luft wird vor Eintritt in den Sorber über eine elektrische Heizung auf ca. 280 °C erhitzt. Das sich erwärmende Sorptionsmittel desorbiert daraufhin Wasserdampf in den Luftstrom, der den Dampf in den Spülbehälter weitertransportiert.
Während eines Teilprogrammschrittes "Trocknen" wird zum Trocknen von Geschirr feuchte Luft aus dem Spülbehälter der Geschirrspülmaschine durch den Sorber zurück in den Spülbehälter geleitet. Die Luft wird beim Durchgang durch die Sorptionsmittel-Schüttung getrocknet und erwärmt.

Zur Vermeidung lokaler Überhitzungen des Sorptionsmittels (hot spots) beim Desorptionsvorgang ist die Heizung in Strömungsrichtung der Luft vor dem Lufteinlass des Sorbers positioniert. Die EP 2207466 offenbart hierzu eine kostengünstige Heizung aus nicht isolierten, elektrischen Leitern. Um den elektrischen Ableitstrom bei gelegentlich vorkommendem Wasserfilm auf den Leitern gezielt an das geerdete Gerätegehäuse abzuleiten, ist das Gehäuse in dem die nicht isolierten Leiter untergebracht sind, mit einer elektrischen Isolierung versehen. Trotz dieser vorgeschalteten Luftheizung bleibt es in der Praxis schwierig, das reversibel dehydrierbare Sorptionsmittel stets ausreichend und einwandfrei zu trocknen. So ist neben einer ausreichenden Sorptionsmittelmenge, deren Anordnung im Sorber entscheidend. Eine relativ hohe Schütthöhe führt zu einer relativ homogenen Aufheizung der gesamten Sorptionsrnittelmenge. Der daraus resultierende hohe Strömungswiderstand zwingt in der Praxis allerdings, die Sorbergeometrie eher flach zu halten und eine inhomogene Temperaturverteilung durch die Verwendung zusätzlichen Sorptionsmittels auszugleichen.

Die Wärmezufuhr zur Desorption des Sorptionsmittels ist auf die Sorptionsmittel-menge und die Sorbergeometrie abzustimmen und kann nicht optimal auf den jeweiligen Wärmebedarf des Geschirrspülers angepasst werden. Bei ausgeführten Vorrichtungen wird die installierte Heizleistung zur geförderten Luftmenge im Verhältnis 170-230 Ws/dm³ gewählt. Gegen Ende der Desorptionsphase ist die aus dem Sorber entweichende Heißluft, insbesondere wenn Zeolith als Sorptionsmittel zum Einsatz kommt, zu heiß, um in den Spülbehälter eingeleitet werden zu können. Die Beheizung und damit eine weitergehende Trocknung der Zeolithfüllung muss in der Praxis vorher eingestellt werden.

Die EP 2 305 876 A1 offenbart einen anderen Lösungsansatz für den Desorptionsprozess. Das Sorptionsmittel wird hier nicht im Heißluftstrom sondern nur über Heizflächen, also rein statisch aufgeheizt. Der aus dem Sorptionsmittel desorbierte, heiße Wasserdampf strömt dabei selbstständig in den darüber liegenden Spülbehälter ab und erwärmt dort die Spülflotte und das zu reinigende Geschirr. Die Temperatur des aufsteigenden Wasserdampfes liegt bei ca. 100 °C. Der Dampf kann innerhalb des Spülbehälters an allen Gegenständen, die kälter sind, auskondensieren und diese erwärmen. Das Sorptionsmittel selbst kann bei statischer Erwärmung auf wesentlich höhere Temperaturen erwärmt werden, als es bei einer Erwärmung durch zirkulierende Heißluft möglich ist. Nachteilig ist jedoch, dass hierzu die elektrische Heizung Innerhalb. des Sorptionsmittels gro8flächlg ausgelegt werden muss, um alle Sorptionsmittelbereiche gleichermaßen aufheizen zu können. Vorgeschlagen werden Rohrheizkörper deren Oberfläche mit Lamellen vergrößert ist. Derartige Heizelemente sind schwer, teuer und haben eine hohe Wärmekapazität.

Die Druckschrift EP 2 389 854 A1 betrifft die Regeneration eines Sorbtionsmittels, bei welchem das Sorbtionsmittel erhitzt, wobei zusätzlich hierzu mithilfe eines Gebläses Luft durch das Sorbtionsmittel geleitet wird.

Ein ähnlicher Ansatz ist aus der EP 2 301 409 A1 bekannt. Gleiches gilt auch für die FR 1 401 668 A.

Aufgabe der Erfindung ist es, bei Sorbern der eingangs genannten Bauart den Energieverbrauch, den Materialaufwand und/oder die Fertigungskosten weiter zu reduzieren.

Dies Aufgabe wird durch die Gegenstände der unabhängigen Ansprüche 1 und 5 gelöst, wobei vorteilhafte Weiterbildungen des erfindungsgemäßen Sorbers bzw. des erfindungsgemäßen Verfahrens in den abhängigen Ansprüchen angegeben sind.

Erfindungsgemäß wird die elektrische Heizfläche innerhalb des Sorbers so angeordnet, dass die Sorptionsmittel-Schüttung statisch auf die notwendige Desorptionstemperatur ohne aktive Luftbewegung angehoben wird. Bei Zeolithen liegt die Desorptionstemperatur je nach angestrebtem Entfeuchtungsgrad zwischen 150 und 280 °C. Diese hohen Temperaturen würden es nicht erlauben, die Sorber-Wände aus preiswerten Kunststoffen zu fertigen. Erfindungsgemäß werden deshalb die Heizflächen innerhalb des Sorbers so angeordnet, dass sie von den Wänden des Sorbers einen ausreichenden Abstand aufweisen, der mit Sorptionsmittel aufgefüllt ist. Dank der relativ schlechten Wärmeleitung (ca. 0,2 W/mK) einer Zeolith-Schüttung gelingt dies, wenn die Abstände zwischen Heizflächen und Gehäuse-Wand im Bereich von 5 bis 15 mm liegen. Der optimale Abstand kann experimentell ermittelt werden. Er ist abhängig vom Zeolithtyp, der Schüttdichte, der Vorbeladurig mit Wasser und 20 der installierten Heizleistung. Zwischen den von den Außenwänden abgelegenen, innenliegenden Heizflächen können die Abstände beliebig gewählt werden. Um eine relativ homogene Aufheizung zu erreichen, können hier die Abstände gegenüber denn Wandabstand in erster Näherung verdoppelt werden. Eine engere Teilung ist dann sinnvoll und notwendig, wenn eine relativ hohe Heizleistung mit dem Ziel einer sehr kurzen Desorptionszeit angestrebt wird. Experimente zeigen, dass bei einer spezifischen Heizleistung von 2000 Watt pro Kilogramm Zeolith ein Abstand zwischen benachbarten Heizflächen von 10 bis 25 mm ausreichend dimensioniert ist. Bei angestrebten spezifischen Heizleistungen von über 6000 Watt/kg reduzieren sich die Abstände auf 5 bis 10 mm. Die Flächenbelastungen der jeweiligen Heizflächen können bis zu 6 Watt/cm² betragen, ohne dass die direkt mit dem elektrischen Heizleiter in Kontakt stehenden Zeolith-Granulate auf zu hohe Temperaturen erhitzt werden. Die zulässigen Kontakttemperaturen beim Desorbieren liegen für Zeolithe bei 550 °C. Bei höheren Temperaturen zeigen Zeolithe eine beginnende Degeneration.

Um die Kosten für die großen Heizflächen zu senken, ist es zweckmäßig, die elektrische Heizung ohne Isolation direkt In die Sorptionsmittel-Schüttung einzubauen. Elektrische Heizungen ohne Isolierung sind insbesondere aus Lufterhitzern bekannt. Auch Haartrockner oder Heißluftpistolen für den Haushalt erhitzen Luft im direkten Kontakt mit nicht isolierten Heizdrähten oder Heizbändern.

Bei statischen Heizgeräten wird die Umgebungsluft ohne Lüfter erwärmt. In einem erfindungsgemäßen Sorber übernimmt die Zeolith-Schüttung selbst die elektrischen Isolieraufgaben gegenüber unterschiedlichen Potentialbereichen der Heizflächen und gegenüber den Gehäusewänden.
Versuche haben gezeigt, dass die allgemeinen Isoliervorschriften bei trockener Zeolith-Schüttung durchaus erfüllbar sind. Wenn allerdings zu Beginn der Desorptionsphase desorbierter Wasserdampf in noch kälteren Wandbereichen wieder auskondensiert, kann es vorkommen, dass die gesetzlich vorgeschriebenen Isoliereigenschaften nicht eingehalten werden.
Abhilfe schafft hier eine elektrische Isolationsschicht zwischen Außenwänden und Zeolith-Schüttung. Als isolierende Schicht kann z.B. eine Keramikbeschichtung (Emaillierung) der Sorber-Innenwände gewählt werden oder aber eine separate Einlage aus temperaturbeständigen Isoliermaterialien wie Mikanit, Glas oder Polypropylen.
Eine besonders kostensparende Lösung ergibt sich dann, wenn nahezu der komplette Sorber aus Kunststoff gefertigt ist. So führt die Verwendung von faserverstärktem Polypropylen, das mit bekannten Spritzgussverfahren verarbeitet werden kann, zu sehr kostensparenden und ausreichend stabilen Sorber-Gehäusen. Die Gehäuse lassen sich, anders als die Edelstahl-Gehäuse nach dem Stand der Technik, den in der Praxis meist sehr beengten und verwinkelten Platzverhältnissen besser anpassen.
Da die Oberflächen des Sorber-Gehäuses erfindungsgemäß deutlich kälter als die Sorptionsmittel-Schüttung bleiben, muss beim Einbau in Spülmaschinen und Wäschetrocknern, kein Sicherheitsabstand zu benachbarten Apparateteilen eingehalten werden. Der Platzbedarf für den Sorber sinkt dadurch nochmals erheblich.

Unter hohen Wasserdampfdrücken und gleichzeitig hohen Temperaturen sind nicht alle Sorptionsmittel stabil. Außer Zeolith kann kein Sorptionsmittel periodisch derart extremen hydrothermalen Bedingungen ausgesetzt werden. Erfindungsgemäß wird Zeolith vom Typ Y verwendet. Dieser ist neben einigen natürlich vorkommenden Zeolithtypen unter den sich ergebenden hohen Temperaturen und Dampfdrücken besonders stabil. Der bisher bei Lufttrocknern üblicherweise zum Einsatz kommende Zeolithtyp A ist weitaus weniger geeignet. Er wandelt sich unter hydrothermalen Bedingungen langsam in inaktive Verbindungen um und hat gegenüber dem hier favorisierten NaY-Zeolith noch einen weiteren Nachteil. Bei den kleinporigeren NaA-Kristallen ist bei relativ hohen Beladungen eine deutliche Abnahme der Adsorptionsgeschwindigkeit zu beobachten. Bei den üblicherweise kurzen Trocknungszeiten kann dieser Zeolithkristall seinen Gleichgewichtszustand nicht erreichen. Dieser Nachteil lässt sich nur durch den Einsatz einer entsprechend größeren Zeolithmenge ausgleichen. Wenn zwischen der letzten Adsorption und der erneuten Desorption mehrere Tage liegen, zeigt sich ein weiteres Problem. Insbesondere bei Spülmaschinen verbleibt im Sumpf der Maschinen stets flüssiges Wasser. Wasserdampf aus dem Bereich des Sumpfes kann über mehrere Tage hinweg vom NaA-Zeolith aufgenommen wird. Bei der erneuten Desorption muss dann aus der größeren NaA-Zeolithmenge eine noch größere Wassermenge desorbiert werden, um wieder in den trockenen Zustand überführt zu werden. Bei Spülmaschinen nach dem Stand der Technik sind zwischen 1,2 und 1,4 kg NaA-Zeolith enthalten. Maschinen mit dem erfindungsgemäßen Sorber benötigen für dieselbe Aufgabe hingegen lediglich 800 bis 950 g Y-Zeolith.

Zeolith ist ein kristallines Mineral, das in einer Gerüststruktur Silizium- und Aluminiumoxide enthält. Die sehr regelmäßige Gerüststruktur enthält Hohlräume, in welchen Wassermoleküle unter Wärmefreisetzung sorbiert werden können. Innerhalb der Gerüststruktur sind die Wassermoleküle starken Feldkräften ausgesetzt, deren Stärke von der bereits in der Gerüststruktur enthaltenen Wassermenge und der Temperatur des Zeolithen abhängt.
Wegen dieser starken Bindungskräfte gegenüber Wasser sollte ein Y-Zeolith erfindungsgemäß auf 290 °C erhitzt werden, um bei einem Wasserdampfpartialdruck von 1000 hPa auf einen Restfeuchtegehalt von unter 7 Massen-% getrocknet zu werden. Erst bei Temperaturen von über 400 °C wäre der Zeolith nahezu trocken (ca. 2,5 Massen-%). Bei nur 200 °C und einem Wasserdampfdruck von 1000 hPa beträgt der Feuchtegehalt erheblich mehr, nämlich ca. 16 Massen-%.

Erfindungsgemäß wird die zur statischen Desorption nötige Wärmeenergie mit hoher Leistung und ohne aktive Luftbewegung in die Sorptionsmittel-Schüttung eingeleitet. Das dabei entstehende Temperaturprofil ist dann sehr inhomogen. Es gibt Bereiche, insbesondere nahe der Sorber-Wände, deren Temperaturen lediglich bei 100 °C oder darunter liegen, während wenige Millimeter daneben in Kontakt mit den offenen Heizleitern Temperaturen über 400 °C gemessen werden. Die Bereiche mit niedrigeren Temperaturen enthalten noch relativ viel Wasser, während die sehr heißen Zeolithkristalle extrem trocken sind. Der Wasserdampfpartialdruck, der auf dem Sorptionsmittel lastet, ist identisch dem herrschenden Luftdruck. In der Regel also zwischen 950 und 1050 mbar. Experimentell wird festgestellt, dass auf diese Weise erst ca. 20 bis 60% der dem jeweiligen Energieinput entsprechenden maximal desorbierbaren Wassermenge aus dem Sorptionsmittel ausgetrieben sind. Die noch verbliebene Wassermenge wird erfindungsgemäß dadurch desorbiert, dass nunmehr in der so definierten Nachlüftzeit die elektrische Heizung abgestellt und das Gebläse eingeschaltet wird. Innerhalb der nächsten Sekunden wird ein erheblicher Teil der noch im Sorptionsmittel enthaltenen Wassermenge vom Luftstrom ausgetragen. Es handelt sich dabei nicht nur um die Dampfmenge, die zwischen dem Sorptionsmittel-Granulat steht, sondern auch um noch im Sorptionsmittel-Kristall gebundenes Kristallwasser. Durch die plötzliche Absenkung des Dampfdruckes wird ein beträchtlicher Teil dieses Kristallwassers bis zum jeweils herrschenden Wasserdampfpartialdruck desorbiert. Die für diese Desorption notwendige Wärmeenergie wird zum einen aus der fühlbaren Wärme der Sorptionsmittel-Schüttung selbst und zum anderen aus dem beim Durchströmen des Sorptionsmittels erhitzten Luftstrom entnommen. Die Sorptionsmittel-Schüttung kühlt sich demzufolge ab. Eine zusätzliche Abkühlung bewirkt die Luftströmung, die ja relativ kalt in die Sorptionsmittelfüllung eintritt und heiß austritt. Die maximale Austrittstemperatur kann prinzipiell auf dem Niveau der maximalen Sorptionsmittel-Temperatur liegen. Ein derart heißer Luftstrom kann insbesondere bei Haushaltsgeräten dann unerwünscht sein, wenn Plastikgeschirr oder empfindliche Wäschestücke angeströmt werden.
Erfindungsgemäß wird deshalb die elektrische Heizung innerhalb des Sorbers so angeordnet, dass im Abströmbereich der Zirkulationsluft nicht oder nur schwach erhitzte Sorptionsmittelbereiche liegen. Die Zirkulationsluft muss folglich durch diese Bereiche strömen und wird dabei erheblich abgekühlt. Parallel zur gewünschten Abkühlung wird nochmals Wasser aus dem Sorptionsmittel desorbiert.

Durch den erfindungsgemäßen Sorberaufbau und das erfindungsgemäße Verfahren kann sogar sichergestellt werden, dass die Temperatur der austretenden Zirkulationsluft auf maximal 100 °C begrenzt ist. Erreicht wird dies dadurch, dass sich schon während der statischen Desorption, während der Phase also wo lediglich Wasserdampf aus dem Sorber entweicht, entlang des Strömungskanals Wasserdampf auskondensiert und die Kanalwände mit einem feinen Wasserfilm oder gar Wassertröpfchen belegt. Strömt nun gleich zu Beginn der Nachlüftung heiße Luft aus dem Sorber in die Strömungskanäle, verdampft dort der Wasserbelag. Die Temperatur der entweichenden Luftströmung reduziert sich auf maximal 100 °C und kann unter günstigen Umständen sogar deutlich unter diese Temperatur abkühlen. Im Experiment lassen sich Temperaturabsenkungen auf unter 60 °C messen.
Damit kann ein weiterer sehr positiver Nebeneffekt erreicht werden. Da sowohl die Sorber-Wandtemperaturen als auch die der Strömungskanäle auf maximal 100 °C begrenzt sind, obwohl der größte Teil der Sorptionsmittelfüllung auf weit höhere Temperaturen geheizt wurde, lässt sich das Sorber-Gehäuse samt Strömungskanälen aus thermoplastischen Kunststoffen fertigen. Insbesondere komplizierte Strukturen wie die Mündung des Strömungskanals in den Spülbehälter einer Spülmaschine kann folglich ebenfalls aus Kunststoff gespritzt werden. Auch Warnhinweise auf diesen Maschinenteilen vor zu hohen Temperaturen können entfallen und die Maschine in allen Bereichen mit temperaturempfindlichem Kunststoff-Geschirr beladen werden.

Umfangreiche Messreihen haben gezeigt, dass mit dem erfindungsgemäßen Verfahren eine vorgegebene Sorptionsmittel-Schüttung hervorragend desorbiert werden kann. Der Aufwand an zuzuführender Wärmeenergie beträgt nur einen Bruchteil der Energie, die bei der Desorption mit zirkulierender Heißluft aufzuwenden ist. Um beispielsweise 150 g Wasser aus einem Zeolith-Sorber zu desorbieren, muss ein konventionelles Heißluftsystem nach dem Stand der Technik typischerweise 585 Wh elektrische Energie aufwenden. Die maximal installierte Heizleistung beträgt 1,35 kW bei einer Zeolithmasse von 1200 g. Die notwendige Desorptionszeit errechnet sich folglich zu 26 Minuten.
Das erfindungsgemäße Verfahren benötigt hierzu lediglich 200 Wh und nur 950 g Zeolith vom Typ NaY. Da die installierte Heizleistung nicht wegen der Sorbergeometrien begrenzt ist, kann bei Haushaltsgeräten die maximal übliche Anschlussleistung von bis zu 3000 Watt genutzt werden. Die statische Desorptionszeit verkürzt sich somit auf lediglich 4 Minuten. Bei professionellen Untertisch-Spülmaschinen ist eine Heizleistung von 6 kW üblich. Die statische Desorptionszeit halbiert sich dadurch auf ca. 2 Minuten. Zu berücksichtigen ist allerdings, dass nach der statischen Desorption noch die kurze aber sehr effiziente Nachlüftung einsetzt. Bei üblicher Gebläseleistung von 20 bis 35 m³/h in Haushaltsmaschinen ist die Nachlüftung nach 60 bis 90 Sekunden abgeschlossen. Aufaddiert ist somit die komplette Desorption in weniger als 6 Minuten abgeschossen. Gegenüber dem Standardverfahren lassen sich somit für die Desorption 20 Minuten und 385 Wh einsparen.

Bei Haushaltsspülmaschinen ist diese zusätzliche Wärmeenergie natürlich nicht verloren. Die Wärme wird mittels der Luftzirkulation in den Spülbehälter und die Spülflotte übertragen. Deren Temperaturen steigen auslegungsgebunden üblicherweise auf die geforderte Arbeitstemperatur von 55 °C.
Beim erfindungsgemäßen Verfahren muss die Wärmeenergie zwar auch in die Spülflotte zusätzlich eingebracht werden, die Aufheizung der Spülflotte kann aber über die ohnehin vorhandene Maschinenheizung erfolgen, deren Heizleistung höher ist, als die begrenzte Heizleistung für die konventionelle Zeolithtrocknung. Die Aufheizzeit bis zur Arbeitstemperatur ist bei höheren Leistungen natürlich kürzer und führt zu einer verkürzten Maschinenlaufzeit. Ein weiterer Effekt ist noch gravierender. Während der Desorption mit Heißluft wird die Spülflotte immer heißer. Damit steigt auch der Wasserdampfpartialdruck der wieder in das Sorptionsmittel eingesaugten Luft immer weiter an. Das Sorptionsmittel wird daher mit Luft durchströmt, deren Wasserdampfpartialdruck kontinuierlich ansteigt. Es gibt folglich das gebundene Wasser immer schlechter ab. Die Desorption des Wasserdampfes wird folglich behindert bis ganz unmöglich. Beim erfindungsgemäßen Verfahren wird die Spülflotte hingegen viel weniger stark erhitzt. Die resultierenden Dampfdrücke während des Nachlüftens sind deutlich niedriger und folglich die Desorption effektiver.

Aus der Patentliteratur sind weitere Begrenzungen der Heißluftbeheizung beschrieben. Der relativ hohe Wärmeeinfall (ca. 500 Wh) in die Spülflotte erwärmt diese zwangsweise um ca. 25 bis 30 K. Die Temperatur der Spülflotte ist folglich nach erfolgter Heißluft-Desorption schon beim Anschluss der Maschine an die Kaltwasserleitung auf dem Niveau der üblichen Energiesparprogamme, nämlich bei 55 °C. Ein Anschluss der Spülmaschine an die Warmwasserversorgung ist damit ausgeschlossen, denn die Desorption ist wegen der dann zu hohen Partialdampfdrücke nicht mehr durchführbar. Beim erfindungsgemäßen Verfahren, bei dem die Spülflotte lediglich um 5 bis 6 K erwärmt wird, sind sowohl ein energiesparender Warmwasseranschluss z.B. von einer Solaranlage als auch eine abgesenkte Spültemperatur (deutlich unter 55 °C) realisierbar.

Die jeweils zum Einsatz kommende Sorptionsmittel-Menge ist für den Trocknungsprozess so zu dimensionieren und so anzuordnen, dass für den einströmenden, feuchten Luftstrom nur ein minimaler Druckabfall innerhalb des Sorptionsmittels überwunden werden muss. Zugleich muss aber das Sorptionsmittel dem zuströmenden Luftstrom ausreichend Oberfläche zur Anlagerung der Wasserdampfmoleküle bieten.
Um eine gleichmäßige Sorption innerhalb des Sorptionsmittels und gleichzeitig einen geringen Druckabfall zu gewährleisten, haben sich besonders Sorptionsmittel-Granulate bewährt. Granulatdurchmesser zwischen 2 und 6 mm zeigen für die erfindungsgemäßen Verfahren optimale Resultate. Insbesondere kleine Granulatdurchmesser von 2 bis 3 mm zeigen eine sehr schnelle Adsorptionskinetik. Somit sind kleinere Durchmesser den größeren vorzuziehen. Kleinere Granulatschüttungen haben allerdings einen deutlich höheren Strömungswiderstand als die gleiche Masse aus großen Kugeln. Insgesamt kann also das erfindungsgemäße Verfahren die Vorteile von kleineren Granulatdurchmessern dank einer niedrigeren Schütthöhe optimaler nutzen.

Noch vorteilhafter sind formbeständige Zeolith-Formkörper, in die bereits die Strömungskanäle eingearbeitet sein können und deren Formgebung der gewünschten Heizflächen-Geometrie angepasst ist. Insbesondere kann der Formkörper so gestaltet sein, dass die nicht isolierten Heizleiter ohne weitere Hilfsmittel befestigt werden können.

Als erste Wahl für Heizleiter eignen sich die Lösungen wie sie auch für statische Lufterhitzer zum Einsatz kommen. Ausgehend von der vorhandenen Spannung, der geforderten Heizleistung und der erlaubten Heizflächenbelastung wählt man zwischen einer großen Auswahl an Heizdrähten und Heizbändern aus diversen Legierungen diejenigen aus, welche die Sorptionsmittel-Schüttung nach den erfindungsgemäßen Vorgaben möglichst homogen aufheizen können. Zum Fixieren der Heizleiter innerhalb der Sorptionsmittel-Schüttung können ebenfalls die aus Lufterhitzern bekannten Haltevorrichtungen wie Mikanit-Platten oder Keramiken zum Einsatz kommen. Zu berücksichtigen ist insbesondere, dass die Haltevorrichtungen die gewünschte Luftströmung nicht negativ beeinflussen und den hohen Temperaturen dauerhaft standhalten.
Besonders kostengünstige Herstellverfahren ergeben sich, wenn die Heizleiter auf einer Spann-Vorrichtung aufgespannt in das Sorber-gehäuse abgesenkt werden und sodann die Zwischenräume mit Sorptionsmittel-Granulat aufgefüllt werden. Die Spann-Vorrichtung kann danach entspannt werden und ohne die Heizleiter aus der Sorptionsmittel-Schüttung herausgezogen werden. Die Heizleiter verbleiben dann fixiert vom Sorptionsmittel am vorgesehen Platz und die Spann-Vorrichtung kann erneut mit Heizleitermaterial bespannt und in das nächste Sorber-Gehäuse abgesenkt werden. Eine rein statische Desorption des Sorptionsmittels über Heizflächen ist gegenüber der Regeneration mittels eines Heißluftstromes energieeffizienter. Insbesondere bei strömungsgünstiger Bauweise mit dünnem Sorptionsmittelbett geht keine Wärme durch die abströmende Heißluft verloren.

Bei statischer Desorption und damit still stehendem Gebläse wird zudem Energie eingespart. Ein Gebläsestillstand von bis zu 20 Minuten kann gegenüber der bekannten Betriebsweise deutlich Stromkosten sparen.

Das erfindungsgemäße Verfahren zum Trocknen von Geschirr wird prinzipiell folgendermaßen ablaufen:
Vor dem eigentlichen Trocknungsschritt wird während der Desorptionsphase die Heizung zum Aufheizen des Sorptionsmittel eingeschaltet. Das Gebläse ist während diesem statischen Desorptionsschritt nicht in Betrieb. Je nach installierter Heizleistung und Größe der Sorptionsmittelmenge kann es einige Minuten dauern bis der erste Dampf aus dem Sorptionsmittel in den Spülbehälter eintritt. Während dieser Zeit kann durchaus die Spülflotte erneuert, d.h. abgepumpt und neu befüllt werden, da ja noch keine Wärmeübertragung in den Spülbehälter erfolgt. Bei Maschinen mit Warmwasseranschluss kann das Auffüllen der Spülflotte mit heißem Wasser bis an das Ende der Nachlüftung verschoben werden.
Sobald der Wasserdampfpartialdruck im Sorptionsmittel den jeweiligen Umgebungsdruck übersteigt, tritt Wasserdampf in den Spülbehälter aus. Für die Gegenstände im Spülbehälter wirkt diese Phase der statischen Desorption wie eine zusätzliche Heißdampf-Reinigung. Insbesondere stark verschmutzte Gegenstände werden auf diese Weise mit Heißdampf besonders effizient vorbehandelt, vor allem wenn sie in der Nähe des Dampfeintritts in den Spülbehälter eingestellt werden. Auch zu Beginn der Nachlüftung bleibt dieser besondere Reinigungseffekt in Takt bis der Wasserdampfpartialdruck unter die spätere Reinigungstemperatur sinkt. Vor dem Eintritt in den Spülbehälter hat der Wasserdampf alle Strömungskanäle ebenfalls auf seine Kondensationstemperatur angehoben und die Oberflächen mit einem Kondensatfilm überzogen. Bei einzelnen Gerätekonstruktionen kann es vorteilhaft sein, während dieser Bedampfung die Umwälzung der Spülflotte zu unterbrechen, damit die Dampfströmung nicht beeinträchtigt wird und beispielweise der Dampf rückwärts in das Gebläse abgedrängt wird.

Die Maschinensteuerung stoppt nach Ablauf der voreingestellten Heizdauer die Heizung und startet das Gebläse für die nun beginnende Nachlüftung. Gleich zu Beginn der Nachlüftung wird eine starke Wasserdampfwolke durch die nachströmende Luft aus dem Sorptionsmittel in den Spülbehälter gedrückt. Die aus dem Spülbehälter angesaugte Luft hat einen relativ niedrigen Wasserdampfpartialdruck. Das Sorptionsmittel, das bisher einem sehr hohen Wasserdampfdruck ausgesetzt war und relativ heiß ist, gibt augenblicklich sehr viel Wasser aus den Zeolithkristallen an die Zirkulationsluft ab. Die zur Desorption dieser Wassermenge notwendige Desorptionswärme war bereits während der statischen Aufheizung gespeichert worden. Die Temperaturen im Sorptionsmittel, insbesondere in der Nähe zu den Heizflächen können am Ende der statischen Aufheizung durchaus 400 °C und mehr erreichen. Die Temperatur des Sorptionsmittels nimmt mit Einsetzen der Nachlüftung und der Nachdesorption stark ab. Dennoch würde der erste Luftzug sehr heiße Zirkulationsluft in den Spülbehälter eintragen. Erfindungsgemäß befindet sich jedoch eine kleine, zusätzliche Sorptionsmittelmenge zwischen dem beheizten Sorpionsmittelbereich und der Einmündung in den Spülbehälter. Diese Sorptionsmittelmenge wird von der ersten heißen Zirkulationsluft erhitzt und damit weiter desorbiert. Die Zirkulationsluft wird folglich abgekühlt. Eine weitere Abkühlung erfährt die Zirkulationsluft, in den Strömungskanälen zum Spülbehälter. Der während der statischen Aufheizung dort kondensierte Wasserdampf wird jetzt augenblicklich verdunstet und die Zirkulationsluft weiter abgekühlt. Im Endergebnis steigt die Zirkulationsluft folglich auch zu Beginn der Nachlüftung nicht über 100 °C an und kann unter Umständen sogar deutlich unter 100 °C sinken.
Im Ergebnis wird also die Nachlüftung, ohne dass die elektrische Heizung in Betrieb ist, zu einer deutlichen Massenabnahme im Sorptionsmittel führen. Experimente zeigen, dass während der Nachlüftung 40 bis 80 % der gesamten Massenabnahme im Sorptionsmittel erfolgt. Die jeweils erreichbare, gesamte Massenabnahme hängt lediglich von der zugeführten statischen Wärmemenge ab. Pro eingebrachter Wattstunde (Wh) werden üblicherweise zwischen 0,73 und 0,78 Gramm (g) Wasser desorbiert.
Konstant ist im Übrigen auch die Dauer der Nachlüftung. Sie ist lediglich von der Bauart des Sorbers und wenig bis gar nicht von der eingebrachten Wärmemenge abhängig. Die genaue Dauer ist somit maschinentypisch und nicht von der jeweiligen Heizdauer abhängig.
Mit dem Ende der fest eingestellten Nachlüftungsdauer hat somit das Sorptionsmittel seine, bezogen auf die eingebrachte elektrische Wärmeenergie, maximale Wassermenge abgegeben. Die noch im Sorber vorhandene und durch die Nachlüftung nicht in den Spülbehälter überführte Wärmemenge beträgt je nach Bauart 40 bis 50 % der eingebrachten Heizwärme. Die verbleibende Wärme ist in Form von Bindungswärme des Wassers im Sorptionsmittel und in Form von fühlbarer Wärme bis zum Beginn des Trocknungsschrittes gespeichert.
Der Trocknungsschritt kann sofort, wie bei professionellen Spülmaschinen, oder aber mit längeren Pausenzeiten in denen das Geschirr gereinigt und klargespült wird, beginnen. Der folgende Trocknungsschritt unterscheidet sich nicht vom Stand der Technik. Das Gebläse zirkuliert Spülbehälter-Luft durch das Sorptionsmittel, das wiederum die Luft trocknet und erwärmt. In einzelnen Haushaltsspülmaschinen kann es vorteilhaft sein, nach Ende oder aber schon vor dem Ende der Gebläselaufzeit, die Klappe der Spülmaschine leicht zu öffnen und Umgebungsluft mit in die Zirkulation einzubeziehen. Die notwendige Trocknungskapazität des Sorbers kann auf diese Weise nochmals reduziert werden und die Trocknungszeit entsprechend verkürzen.

Obwohl die erfindungsgemäßen Vorteile überwiegend für den Anwendungsfall Geschirrtrockner beschrieben sind, gilt Analoges auch für Wäschetrockner. Neben der angestrebten höheren Energieeffizienz erreicht man mit dem erfindungsgemäßen Verfahren eine niedrigere Trocknungstemperatur, die wiederum für empfindliche Gewebe vorteilhaft ist. Damit einhergehend ist eine kürzere Trocknungszeit zu erwarten.

Die Zeichnung zeigt in:
Fig. 1 einen Geschirrtrockner mit einem statisch aufzuwärmenden Sorptionsmittel in einem Sorber im unteren Bereich einer Spülmaschine,
Fig. 2 einen Geschirrtrockner mit einem statisch aufzuwärmenden Sorptionsmittel in einem Sorber oberhalb des Spülbehälters,
Fig. 3 einen Sorber in geschnittener Darstellung mit innenliegenden elektrisch beheizten Heizflächen,
Fig. 4 eine Heizfläche aus einer Mikanit-Platte, die mit einem Heizband umwickelt ist,
Fig. 5 eine Darstellung der Massenabnahme eines Sorptionsmittels während der Desorption,
Fig. 6 den Temperaturverlauf dreier Messstellen an einem Sorber mit dazugehörigem Verlauf der Massenabnahme.

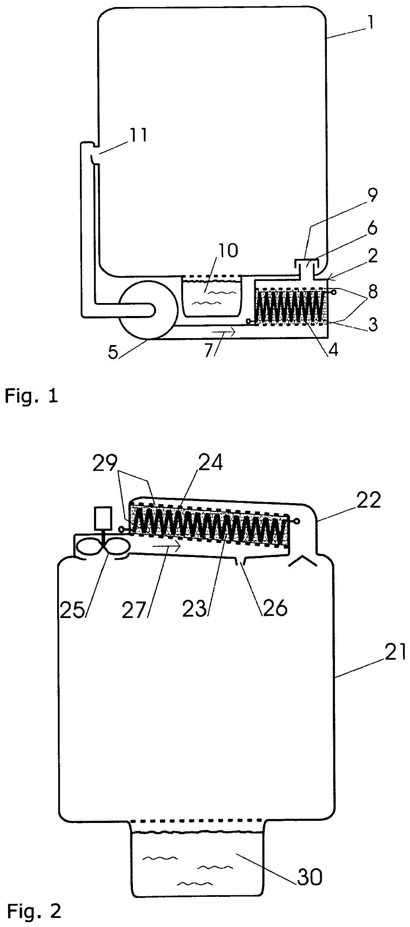

Fig. 1 zeigt schematisch einen Haushalts-Geschirrspüler mit einem Spülbehälter 1 zur Aufnahme von Geschirr. In einem Sorber 2 befindet sich ein Zeolith enthaltendes Sorptionsmittel 3, das mittels elektrisch nicht isolierter Heizflächen 4 statisch desorbiert werden kann und zwischen zweier Streckgitterplatten 8 fixiert ist. Das Sorptionsmittel 3 enthält 900 Gramm Kugelgranulat vom Typ Na-Y. Das Kugelgranulat ist bindemittelfrei hergestellt und hat eine Größenverteilung zwischen 2 und 3 mm. Ein Gebläse 5 kann Zirkulationsluft 7 über eine Öffnung 11 aus dem Spülbehälter 1 absaugen und in Pfeilrichtung durch das Sorptionsmittel 3 und eine Eintrittsmündung 6 zurück in den Spülbehälter 1 fördern. Die Eintrittsmündung 6 ist durch eine Spritzschutz-Haube 9 abgedeckt, die ein Eindringen von flüssiger Spülflotte 10 in den Sorber 2 verhindert. Erfindungsgemäß sind das Sorber-Gehäuse, das Lüfter-Gehäuse und die Eintrittsmündung 6 samt der Spritzschutz-Haube 9 komplett aus Kunststoff gefertigt. Lediglich die Streckgitterplatten 8 und die Heizflächen 4 enthalten Metalle. Die Heizflächen 4 haben eine Heizleistung von 1700 Watt bei 230 Volt.
In Fig. 2 ist schematisch eine gewerbliche Spülmaschine skizziert, bei welcher ein Sorber 22 oberhalb eines Spülbehälters 21 angeordnet ist. Auch er enthält eine elektrisch nicht isolierte Heizung 24 und ein zwischen zwei Lochblechen 29 eingehaustes Sorptionsmittel 23, das 1200 Gramm NaY-Zeolith-Granulat enthält. Ein Gebläse 25 kann auch hier Zirkulationsluft 27 aus dem Spülbehälter 21 ansaugen und über das Sorptionsmittel 23 zurück in den Spülbehälter 21 leiten. Das Sorber-Gehäuse ist dabei so geformt und angeordnet, dass kondensierte Wassertröpfchen und beim Spülprozess durch das Gebläse 25 eindringende Tropfen des Spülmittels 30 zurück in den Spülbehälter 21 abfliesen können. Der Spülbehälter 21 enthält hierzu geeignet geformte, kleine Rücklauf-Öffnungen 26. Auch in diesem Anwendungsfall ist das Gehäuse des Sorbers 22 aus Kunststoff gefertigt.

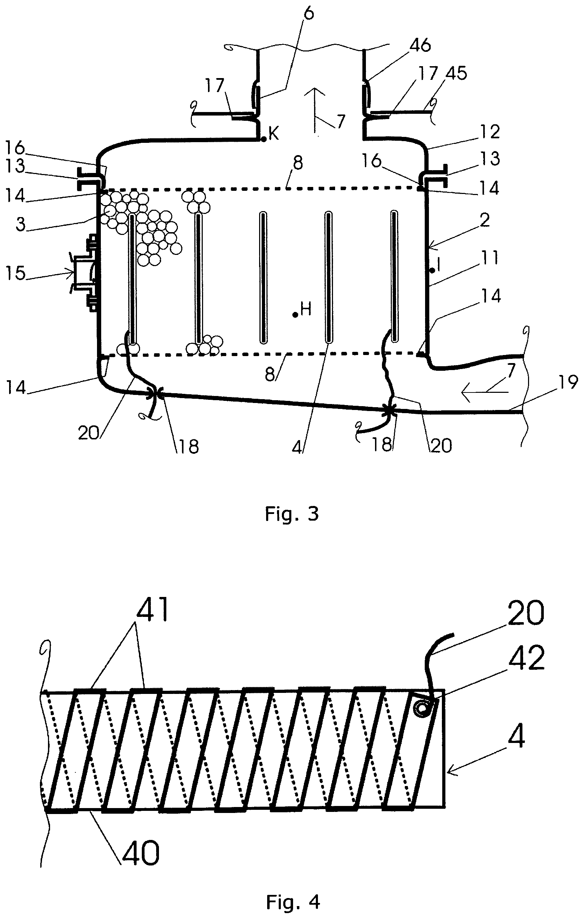

Fig. 3 zeigt den Sorber 2 aus Fig. 1 in geschnittener Darstellung. Er besteht im Wesentlichen aus zwei Kunststoff-Formteilen, einem unteren Gehäuseteil 11 und einem passenden oberen Deckelteil 12.

Das Gehäuseteil 11 hat zwei umlaufende Vorsprünge 14 auf denen die untere und die obere Streckgitterplatten 8 aufliegen. Zwischen den Streckgitterplatten 8 befindet sich die 45 mm starke, nur teilweise gezeichnete Sorptionsmittelfüllung 3, in die fünf identische Heizplatten 4 eingestellt sind. Der Abstand der Heizplatten 4 zu der unteren Streckgitterplatte 8 ist dabei kleiner als der Abstand zu der oberen Streckgitterplatte 8. Damit ist über den Heizplatten 4 eine größere Zeolithmenge untergebracht, die sich erst zu Beginn der Nachlüftung weiter desorbieren lässt. Die Heizplatten 4 benötigen keine weitere Befestigungen, da das Sorptionsmittel 3 diese Aufgabe übernimmt. Die fünf Heizplatten 4 sind elektrisch in Reihe geschaltet. Jede hat somit eine Heizleistung von 340 Watt. Die beiden isolierten Anschlussdrähte 20 sind über zwei mit Gummielementen 18 gedichtete Öffnungen aus dem Boden des unteren Gehäuseteils 11 herausgeführt. Der Abstand der beiden äußeren Heizplatten 4 zu den Kunststoff-Wänden des Sorbers 2 beträgt 10 mm, der Abstand zwischen den inneren Heizplatten 4 ist doppelt so groß. An der linken Außenwand des Sorbers 2 ist ein Temperatur-Schalter 15 angebracht, der bei Temperaturen über 100 °C den Heizstrom unterbricht. Im unteren Gehäuseteil 11 ist ein Strömungskanal 19, passend zu einem nicht gezeichneten Gebläse, angeformt. Das Deckelteil 12 hat ebenfalls einen umlaufenden Vorsprung 16, der nach dem Heißversiegeln an den dafür vorgesehenen Nähten 13 mit dem unteren Gehäuseteil 11 die obere Streckgitterplatte 8 fest auf die Sorptionsmittel-Schüttung 3 presst. An das Deckelteil 12 ist zugleich die Eintrittsmündung 6 in den Spülbehälter 1 angeformt. Der Sorber 2 kann von unten durch ein passendes Loch in die Bodenplatte 45 des Spülbehälters 1 bis zu einem angeformten Stützring 17 eingeschoben werden. Mittels nicht gezeichneter Dichtmittel kann eine nach außen hin dichte und zugleich tragende Verbindung 46 mit der nicht gezeichneten Spritzschutz-Haube hergestellt werden.

Fig. 4 zeigt ein einzelnes Heizelement 4 aus Fig. 3 in Seitenansicht. Auf einen 0,5 mm dicken und 25 mm breiten Mikanit-Steifen 40 ist ein metallisches Heizband 41 aufgewickelt. Das Heizband 41 hat eine Länge von 2,6 m, ist 5 mm breit und 0,12 mm dick. Am rechten Ende ist es mittels einer Niete 42 am Mikanit-Streifen 40 befestigt und mit dem isolierten Anschlussdraht 20 verbunden.

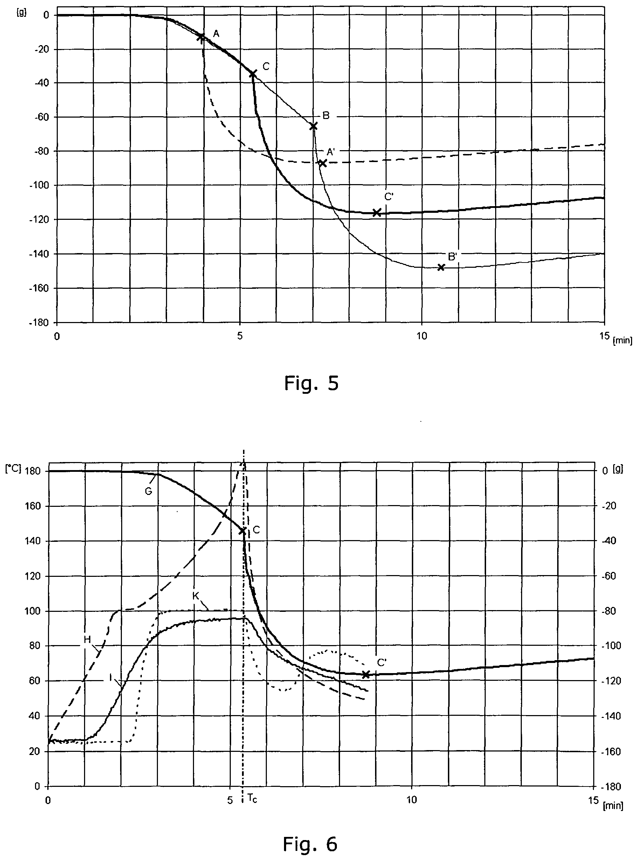

Fig. 5 zeigt die Massenabnahme (in Gramm) des Sorptionsmittels 3 aus Sorber 2 in Fig. 1 und 3. über einen Zeitraum von 15 min. Zum Zeitpunkt Null wird die Heizung 4 mit 1700 Watt in Betrieb genommen. Nach 2,5 Minuten entweicht der erste Wasserdampf aus dem Sorber 2, erkennbar am beginnenden Massenverlust. Zum Zeitpunkt A wird die Heizung 4 abgestellt und das Gebläse 5 eingeschaltet. Der Sorber 2 hat zu diesem Zeitpunkt erst 17 g Wasserdampf an den Spülbehälter 1 abgegeben aber bereits 110 Wh Wärmeenergie aufgenommen. Mit Start des Gebläses 5 wird eine starke Massenabnahme sichtbar. Der nunmehr zirkulierende Luftstrom 7 senkt den Wasserdampfdruck um das Zeolith-Granulat und vereinheitlicht die Temperaturen innerhalb des Sorptionsmittels. Nach 7,3 min, im Punkt A' ist die maximale Dampfmenge aus dem Sorptionsmittel 3 ausgetragen. Eine weitere Nachlüftung würde, wie der weitere Verlauf der Kurve zeigt, wieder zu einer Adsorption des Wasserdampfes aus der Zirkulationsluft 7 führen.
Die Kurven C C' und B B' zeigen die Massenabnahmen desselben Sorbers 2 nach einer statischen Heizdauer von 5,3 min bzw. von 7 min. Nach 5,3 min Heizdauer ist der Kurvenpunkt C erreicht. Zu diesem Zeitpunkt sind über die Heizplatten 4 150 Wh elektrische Energie zugeführt worden. Die statische Dampfabgabe beträgt 37 g. Die anschließende 3,5 Minuten dauernde Nachlüftung erhöht die abgegebene Wassermenge aus dem Sorptionsmittel 3 auf insgesamt 118 g (Punkt C'). Auch hier führt eine weitere Nachlüftung wieder zu einer Wasserdampfadsorption.
Im dritten Beispiel wird die statische Heizung 4 erst nach 7 min im Punkt B gestoppt. Bis zu diesem Zeitpunkt hat der Sorber 62 g Wasser desorbiert und als Dampf in den Spülbehälter 1 abgegeben. Die nun folgende, ebenfalls 3,5 Minuten dauernde Nachlüftung endet zum Zeitpunkt B' bei Minute 10,5. Das Sorptionsmittel 3 hat nun 150 g Wasser abgeben. Die aufgenommene Wärmeenergie beträgt 200 Wh.
Aus den drei Versuchen wird deutlich, dass bei der hier gewählten Heizleistung erst nach 2,5 min der erste Dampf aus dem Sorber aufsteigt. Während dieser Zeit wurde die gesamte elektrische Energie zum Erhitzen des Sorptionsmittels 3 und der mit ihm in Kontakt stehenden Bauteile benötigt. Erst während der folgenden Minuten wird Wasserdampf mit einem Dampfdruck, der dem Umgebungsdruck entspricht, in den Spülbehälter abgegeben. Die anschließenden Nachlüftungen von jeweils 3,5 min reduzieren die Restwassermenge im Sorptionsmittel 3 auf das Minimum. Bemerkenswert ist, dass die optimale Nachlüftzeit nicht von der vorausgehenden Heizzeit und somit nicht von der eingebrachten Wärmemenge abhängt. Sie beträgt bei dieser Versuchsanordnung jeweils 3,5 min. Eine höhere Gebläseleistung würde diese Nachlüftzeit einheitlich reduzieren, eine geringere Gebläseleistung einheitlich verlängern. Weitere Berechnungen zeigen, dass das Verhältnis von desorbiertem Wasserdampf zu aufgewandter Desorptionswärme relativ unabhängig von der eingekoppelten Wärmeenergie zwischen 0,73 und 0,78 g/Wh liegt. Für die Steuerung einer Spülmaschine bedeutet dies, dass sich die gewünschte Trocknungskapazität einfach über die Heizzeit der Heizung 4 einstellen lässt. Wenn beispielsweise eine Trocknungskapazität von 140 g gefordert wird, ist eine statische Heizenergie von 186 Wh notwendig. In Kenntnis der installierten Heizleistung ist dann die statische Heizdauer bestimmt. Die Dauer der Nachlüftung ist davon unabhängig. Sie hängt lediglich von der geförderten Zirkulationsluftmenge ab.

Fig. 6 zeigt schließlich drei Temperaturverläufe während der Desorptionsphase eines Sorbers 2 nach den Figuren 1, 3 und 5. Dargestellt ist der Temperaturverlauf H innerhalb des Sorptionsmittels 3 zwischen zwei inneren Heizflächen 4, der Temperaturverlauf I an der Außenwand des Sorbergehäuses in Höhe des Temperaturschalters 15 und der Temperaturverlauf K im Bereich der Eingangsmündung 6. Mit eingezeichnet ist die Massenabnahme G des Sorptionsmittels 3. Die Massenabnahme G ist am rechten Bildrand aufgetragen. Sie ist mit der Kurve C C' aus Fig. 5 identisch.
Mit Start der statischen Heizung 4 beginnt als erstes die Temperatur H anzusteigen. Der schnelle Anstieg resultiert aus einer teilweisen Re-Adsorption von Dampf der bereits aus noch heißeren Zeolithbereichen ausgetrieben wurde. Bei 100 °C zeigt der Kurvenverlauf ein leichtes Plateau. Der Zeolith in diesem Bereich wird erst dann heißer, wenn über Wärmeleitung weitere Wärme auf höherem Temperaturniveau zufließt. Zum Zeitpunkt Tc=5,4 min wird die Heizung 4 abgestellt. Der Temperaturverlauf H hat sein Maximum bei über 180 °C erreicht. Mit einsetzender Nachlüftung fällt seine Temperatur schnell ab. 3,5 Minuten später ist diese Temperatur auf 50 °C abgefallen. Zu diesem Zeitpunkt hat der Zeolith seinen niedrigsten Restwassergehalt. Die Nachlüftung wird gestoppt. Der Temperaturverlauf der Sorber-Außenwand an der Messstelle I (s.a. Fig. 3) wird erwartungsgemäß weniger stark ansteigen. Die maximale Temperatur von 95 °C wird auch hier mit dem Abstellen der statischen Heizung 4 erreicht. Mit Beginn der Nachlüftung sinkt auch diese Messstelle und bleibt immer unter einem für Kunststoffe unkritischen Wert.
Überraschend ist der Kurvenverlauf der Messstelle K im Bereich der Eingangsmündung 6. Hier beginnt der Anstieg erst 2,2 Minuten nach Start der statischen Heizung 4. Die Temperatur steigt zu diesem Zeitpunkt schnell auf 100 °C an und verbleibt dort bis zum Ende der Heizzeit. Der Anstieg von Raumtemperatur auf 100 °C deckt sich mit dem Beginn der Massenabnahme im Sorptionsmittel 3. Der von dort aufsteigende Dampf kondensiert zunächst an den Strömungswänden und erhitzt diese auf seine Kondensationstemperatur. Erst danach strömt er weiter in den Spülbehälter 1 und kondensiert dort. Der Kondensatfilm an den Strömungskanälen führt nun im weiteren Verlauf zu den erfindungsgemäßen Vorteilen. Sofort mit Beginn der Nachlüftung zum Zeitpunkt Tc sinkt die Temperatur im Minimum auf ca. 55 °C um dann wieder auf ca. 78 °C zu steigen. Obwohl also die aus dem heißen Sorptionsmittel 3 austretende Zirkulationsluft 7 weit über 100 °C heiß sein müsste, verbleibt sie wegen der weiteren Desorption der obersten Zeolithschichten und der Nachverdampfung des Kondensationsfilms deutlich unter 100 °C. Temperaturen unter 100 °C treten deshalb auf, weil die Zirkulationsluft 7 relativ trocken ist und die Verdunstung dadurch schon bei tieferen Temperaturen, im Beispiel bei 55 °C, stattfindet. Dass die Temperaturen in der Folge nochmals auf ca. 78 °C ansteigen liegt darin, dass der Kondensationsfilm beim Temperaturminimum verdampft ist. Eine weitere Verdunstungskühlung ist folglich nicht mehr möglich. Dennoch verbleibt die Austrittstemperatur unter 80 °C, da sich das Sorptionsmittel 3 inzwischen selbst deutlich abgekühlt hat.
Somit bleiben alle Temperaturen während der gesamten Desorption bis auf die innerhalb der Sorptionsmittels 3 unter 100 °C.

## Patentansprüche

1. Sorber (2, 22) mit einem Sorptionsmittel (3), das in direktem Kontakt zu Heizflächen (4, 24) einer Heizung steht, die während einer statischen Desorption das Sorptionsmittel (3) erhitzten, wobei die Heizflächen (4, 24) gegenüber dem Sorptionsmittel (3) elektrisch nicht isoliert eingebettet sind und wobei zwischen dem Sorptionsmittel (3) und dem Sorber-Gehäuse eine elektrische Isolierschicht eingezogen ist,
wobei ferner ein Gebläse vorgesehen ist zum Bewirken einer Luftzirkulation durch das Sorptionsmittel (3), und
wobei ferner eine Maschinensteuerung vorgesehen ist, wobei die Maschinensteuerung ausgebildet ist, zum Desorbieren des Sorptionsmittels die Heizung einzuschalten derart, dass ohne erzwungene Luftbewegung durch direkte, statische Wärmezufuhr das Sorptionsmittel erhitzt wird, wobei die Maschinensteuerung ferner ausgebildet ist, nach Ablauf einer voreingestellten Heizdauer die Heizung zu stoppen und das Gebläse zum Zwecke einer dann beginnenden Nachlüftung zu starten.

2. Sorber (2, 22) nach Anspruch 1,
wobei die Sorber-Wände aus Kunststoff gefertigt sind.

3. Sorber (2, 22) nach Anspruch 1 oder 2,
wobei die Heizung derart ausgebildet ist, dass im Betrieb der Heizung die Heizflächen (4, 24) eine Heizleistung zwischen 1700 und 6000 Watt pro Kilogramm Sorptionsmittel (3) liefern.

4. Sorber (2, 22) nach einem der Ansprüche 1 bis 3,
wobei die Heizflächen (4, 24) so innerhalb des Sorptionsmittels (3) angeordnet sind, dass im Abströmbereich der Zirkulationsluft (7, 27) nicht oder nur schwächer erhitzte Sorptionsmittelpartien liegen.

5. Verfahren zum Desorbieren eines festen, mit Wasser teilbeladenen Sorptionsmittels (3), das innerhalb eines Sorbers (2, 22) untergebracht ist und das durch direkte, statische Wärmezufuhr und ohne erzwungene Luftbewegung erhitzt wird, wobei sich nach dem Ende der statischen Wärmezufuhr eine Nachlüftung anschließt, bei der eine erzwungene Zirkulationsluft (7, 27) durch das Sorptionsmittel (3) weiteren Wasserdampf aus dem Sorptionsmittel (3) nachdesorbiert und aus dem Sorber (2, 22) austrägt und dass die zur weiteren Desorption des Wasserdampfes notwendige Wärmeenergie mindestens teilweise aus der während der statischen Desorption aufgewandten fühlbaren Wärme bezogen wird und das Sorptionsmittel dadurch deutlich abgekühlt wird, wobei der Sorber (2, 22) ein Sorber (2, 22) gemäß einem der Ansprüche 1 bis 4 ist.

6. Verfahren nach Anspruch 5,
wobei die erzwungene Zirkulationsluft (7, 27) dann abgestellt wird, wenn die unter den gegebenen Bedingungen maximale Wasserdampfmenge aus dem Sorptionsmittel (3) desorbiert ist.

7. Verfahren nach Anspruch 5 oder 6,
wobei während der statischen Desorption bis 80 % und während der Nachlüftung der Rest der gesamten Wassermenge desorbiert werden.

8. Verfahren nach einem der Ansprüche 5 bis 7,
wobei während der Nachlüftung die aus dem Sorptionsmittel (3) abströmende Zirkulationsluft (7, 27) weitere, in seiner Strömungsrichtung angeordnete Sorptionsmittelbereiche durchströmt und diese dabei erwärmt und weiter desorbiert.

9. Verfahren nach einem der Ansprüche 5 bis 8,
wobei während der statischen Desorption desorbierter Wasserdampf in Strömungskanälen rückkondensiert und einen Wasserfilm auf den Wänden der Strömungskanäle bildet, der zu Beginn der Nachlüftung verdunstet und die Zirkulationsluft (7, 27) kühlt.

10. Verfahren nach einem der Ansprüche 5 bis 9,
wobei am Ende der Nachlüftung pro Wattstunde (Wh) eingekoppelte Wärmeenergie mehr als 0,7 Gramm (g) Wasser desorbiert sind.

11. Verfahren nach einem der Ansprüche 5 bis 10,
wobei am Ende der Nachlüftung 40 bis 70 % der eingekoppelten Wärmeenergie wieder aus dem Sorber ausgetragen sind.

12. Verfahren nach einem der Ansprüche 5 bis 11,
wobei die während der Nachlüftung aus dem Sorber (2, 22) austretende Zirkulationsluft (7, 27) auf maximal 100 °C begrenzt ist.

## Claims

1. Sorber (2, 22) having a sorbent (3) which is in direct contact with heating surfaces (4, 24) of a heating means, which surfaces heated the sorbent (3) during a static desorption, wherein the heating surfaces (4, 24) are embedded in an electrically non-insulating manner in relation to the sorbent (3), and wherein an electrical insulation layer is incorporated between the sorbent (3) and the sorber housing,
wherein, for the purpose of bringing about circulation of air through the sorbent (3), a blower is also provided, and
wherein a machine controller is also provided, wherein the machine controller is designed to switch on the heating means such that the sorbent is heated by way of direct static heat supply without forced movement of air for the purpose of desorbing the sorbent, wherein the machine controller is also designed to stop the heating means after a preset heating duration has elapsed and to start the blower for the purpose of post-aeration beginning then.

2. Sorber (2, 22) according to Claim 1,
wherein the sorber walls are manufactured from plastic.

3. Sorber (2, 22) according to Claim 1 or 2,
wherein the heating means is designed such that, during the operation of the heating means, the heating surfaces (4, 24) provide a heating power of between 1700 and 6000 watts per kilogram of sorbent (3) .

4. Sorber (2, 22) according to one of Claims 1 to 3, wherein the heating surfaces (4, 24) are arranged within the sorbent (3) such that unheated or only relatively weakly heated sorbent portions are situated in the outflow region of the circulation air (7, 27).

5. Method for desorbing a solid sorbent (3) which is partly laden with water and which is accommodated within a sorber (2, 22) and is heated by way of direct static heat supply and without forced movement of air, wherein, after the end of the static heat supply, post-aeration follows, in which forced circulation air (7, 27) through the sorbent (3) post-desorbs further water vapour from the sorbent (3) and discharges said water vapour from the sorber (2, 22), and in that the heat energy required for the further desorption of the water vapour is obtained at least partially from the sensible heat applied during the static desorption, and the sorbent is significantly cooled as a result, wherein the sorber (2, 22) is a sorber (2, 22) according to one of Claims 1 to 4.

6. Method according to Claim 5,
wherein the forced circulation air (7, 27) is shut off if the maximum water vapour quantity under the given conditions is desorbed from the sorbent (3).

7. Method according to Claim 5 or 6,
wherein, during the static desorption, up to 80% of the total water quantity is desorbed and, during the post-aeration, the remainder of the total water quantity is desorbed.

8. Method according to one of Claims 5 to 7,
wherein, during the post-aeration, the circulation air (7, 27) flowing out of the sorbent (3) flows through further sorbent regions arranged in its flow direction and, in the process, heats and further desorbs said regions.

9. Method according to one of Claims 5 to 8,
wherein, during the static desorption, desorbed water vapour re-condenses in flow channels and forms a film of water on the walls of the flow channels, which film, at the start of the post-aeration, evaporates and cools the circulation air (7, 27).

10. Method according to one of Claims 5 to 9,
wherein, at the end of the post-aeration, more than 0.7 grams (g) of water are desorbed per watt-hour (Wh) of coupled-in heat energy.

11. Method according to one of Claims 5 to 10,
wherein, at the end of the post-aeration, 40 to 70% of the coupled-in heat energy is discharged from the sorber again.

12. Method according to one of Claims 5 to 11,
wherein the circulation air (7, 27) exiting the sorber (2, 22) during the post-aeration is limited to a maximum of 100°C.

## Revendications

1. Sorbeur (2, 22) avec un moyen de sorption (3), qui se trouve en contact direct avec des faces chauffantes (4, 24) d'un chauffage, qui échauffent le moyen de sorption (3) pendant une désorption statique, dans lequel les faces chauffantes (4, 24) sont noyées de façon non isolée électriquement par rapport au moyen de sorption (3) et dans lequel une couche d'isolation électrique est tirée entre l'agent de sorption (3) et le boîtier de sorbeur,
dans lequel il est en outre prévu une soufflante pour créer une circulation d'air à travers le moyen de sorption (3), et
dans lequel il est en outre prévu une commande de machine, dans lequel la commande de machine est conçue pour connecter le chauffage pour la désorption du moyen de sorption, de telle manière que le moyen de sorption soit échauffé par apport direct statique de chaleur sans circulation d'air forcée, dans lequel la commande de machine est en outre conçue pour arrêter le chauffage après l'expiration d'une durée de chauffage préréglée et pour faire démarrer la soufflante en vue d'une ventilation complémentaire qui commence à ce moment.

2. Sorbeur (2, 22) selon la revendication 1, dans lequel les parois du sorbeur sont fabriquées en matière plastique.

3. Sorbeur (2, 22) selon la revendication 1 ou 2, dans lequel le chauffage est réalisé de telle manière qu'en fonctionnement du chauffage les faces chauffantes (4, 24) fournissent une puissance de chauffage comprise entre 1700 et 6000 watts par kilogramme de moyen de sorption (3) .

4. Sorbeur (2, 22) selon l'une quelconque des revendications 1 à 3, dans lequel les faces chauffantes (4, 24) sont disposées à l'intérieur du moyen de sorption (3) de telle manière que des parties du moyen de sorption pas ou seulement peu chauffées soient situées dans la zone d'évacuation de l'air de circulation (7, 27).

5. Procédé pour désorber un moyen de sorption (3) solide, partiellement chargé d'eau, qui est agencé à l'intérieur d'un sorbeur (2, 22) et qui est échauffé par apport direct statique de chaleur et sans circulation d'air forcée, dans lequel une ventilation complémentaire succède à la fin de l'apport de chaleur statique, au cours de laquelle de l'air de circulation forcée (7, 27) à travers du moyen de sorption (3) désorbe encore davantage de vapeur d'eau hors du moyen de sorption (3) et l'emporte hors du sorbeur (2, 22), et dans lequel l'énergie thermique nécessaire pour la désorption supplémentaire de la vapeur d'eau est soutirée au moins en partie de la chaleur sensible appliquée pendant la désorption statique et le moyen de sorption est ainsi nettement refroidi, dans lequel le sorbeur (2, 22) est un sorbeur (2, 22) selon l'une quelconque des revendications 1 à 4.

6. Procédé selon la revendication 5, dans lequel on arrête l'air de circulation forcée (7, 27) lorsque la quantité de vapeur d'eau maximale dans les conditions données est désorbée du moyen de sorption (3).

7. Procédé selon la revendication 5 ou 6, dans lequel on désorbe pendant la désorption statique jusque 80 % et pendant la ventilation complémentaire le reste de la quantité d'eau totale.

8. Procédé selon l'une quelconque des revendications 5 à 7, dans lequel l'air de circulation (7, 27) quittant le moyen de sorption (3) pendant la ventilation complémentaire s'écoule à travers d'autres régions du moyen de sorption disposées dans sa direction d'écoulement et de ce fait les chauffe et les désorbe encore.

9. Procédé selon l'une quelconque des revendications 5 à 8, dans lequel on recondense la vapeur d'eau désorbée pendant la désorption statique dans des canaux d'écoulement et on forme sur les parois des canaux d'écoulement un film d'eau qui se vaporise au commencement de la ventilation complémentaire et qui refroidit l'air de circulation (7, 27).

10. Procédé selon l'une quelconque des revendications 5 à 9, dans lequel à la fin de la ventilation complémentaire plus de 0,7 grammes (g) d'eau par wattheure (Wh) d'énergie thermique apportée sont désorbés.

11. Procédé selon l'une quelconque des revendications 5 à 10, dans lequel à la fin de la ventilation complémentaire 40 à 70 % de l'énergie thermique apportée sont de nouveau évacués hors du sorbeur.

12. Procédé selon l'une quelconque des revendications 5 à 11, dans lequel l'air de circulation (7, 27) quittant le sorbeur (2, 22) pendant la ventilation complémentaire est limité au maximum à 100°C.
